Europäisches Patentamt

European Patent Office

Office européen des brevets

(11) Publication number: **0 175 216**
**B1**

(12) EUROPEAN PATENT SPECIFICATION

(45) Date of publication of patent specification: **07.12.88**

(51) Int. Cl.⁴: **F 28 F 13/18**

(21) Application number: **85111182.3**

(22) Date of filing: **04.09.85**

(54) **Heat transfer wall for vaporizing liquids and method of producing same.**

(30) Priority: **14.09.84 JP 191578/84**
**30.10.84 JP 228723/84**

(43) Date of publication of application:
**26.03.86 Bulletin 86/13**

(45) Publication of the grant of the patent:
**07.12.88 Bulletin 88/49**

(84) Designated Contracting States:
**DE FR GB**

(56) References cited:
**FR-A-2 268 580**
**US-A-3 454 081**
**US-A-3 906 604**
**US-A-4 060 125**

(73) Proprietor: **HITACHI, LTD.**
**6, Kanda Surugadai 4-chome Chiyoda-ku**
**Tokyo 100 (JP)**
(73) Proprietor: **HITACHI CABLE, LTD.**
**1-2, Marunouchi 2-chome**
**Chiyoda-ku Tokyo 100 (JP)**

(72) Inventor: **Kuwahara, Heikichi**
**213-140, Hakari Kitaura Minorimachi**
**Higashiibaraki-gun Ibaraki-ken (JP)**
Inventor: **Takahashi, Kenji**
**4-21, Namiki-6-chome**
**Abiko-shi (JP)**
Inventor: **Yanagida, Takehiko**
**393-26, Karasuyama**
**Tsuchiura-shi (JP)**
Inventor: **Nakayama, Wataru**
**2068-41, Masuo**
**Kashiwa-shi (JP)**
Inventor: **Sugimoto, Shigeo**
**1-172, Taguu Ushikumachi**
**Inashiki-gun Ibaraki-ken (JP)**
Inventor: **Nakayama, Yoshihiko**
**419-68, Shimohirooka Sakuramura**
**Niihari-gun Ibaraki-ken (JP)**
Inventor: **Yoshida, Hiromichi**
**38-14, Nishinarusawacho-4-chome**
**Hitachi-shi (JP)**

**EP 0 175 216 B1**

(72) Inventor: **Oizumi, Kiyoshi**
**624-15, Nakanukimachi**
**Tsuchiura-shi (JP)**
Inventor: **Sasaki, Toshi**
**1371-5, Ozawacho**
**Hitachiota-shi (JP)**
Inventor: **Fukuda, Shigeho**
**17-8, Sukegawacho-5-chome**
**Hitachi-shi (JP)**

(74) Representative: **Finck, Dieter et al**
**Patentanwälte v. Füner, Ebbinghaus, Finck**
**Mariahilfplatz 2 & 3**
**D-8000 München 90 (DE)**

**Description**

The invention relates to a heat transfer wall as described in the preamble of claim 1 which is capable of transferring heat to liquids, such as Freon, which are brought into contact therewith by vaporizing and boiling the liquids, and a method of producing the heat transfer wall according to the preamble of claim 2. Such a heat transfer wall and method for producing the same are known from the US—A—4 060 125.

Recently, heat transfer walls of the type described have been widely used for manufacturing equipment, resulting in a miniaturization of the equipment and an improvement in the performance thereof. However, the provision of a heat transfer wall having further improved heat transfer characteristics is desirable.

The object of the invention is to provide a heat transfer wall having an improved heat transfer characteristic, and a method for producing of such a heat transfer wall.

Starting from the heat transfer wall and method mentioned above, this object is, according to the present invention, solved by the features given in the characterizing parts of claim 1 and 2, respectively.

The outstanding feature of the invention enabling the aforesaid object to be accomplished is that projections are provided in the holes formed at the surface of the heat transfer wall which extend each from the vicinity of a hole portion in a direction in which the projection traverses the hole, whereby the flow of fluids (gas and liquid) through the hole can be regulated, resulting in an improved performance in transferring heat.

Subclaims 3 and 4 includes further steps advantageously used in the method of claim 2 forming the projections in the production of the heat transfer wall according to the invention.

The heat transfer wall according to the invention and the method for producing the same are now described in detail with reference to the drawings, in which:

Fig. 1 is a schematic view of a portion of a surface of the heat transfer wall;

Figs. 2—4 are plan views, on an enlarged scale, of one of the hole portions formed at the surface of the heat transfer wall shown in Fig. 1;

Fig. 5 is a view as seen in the direction of arrows V—V in Fig. 2;

Fig. 6 is a view as seen in the direction of the arrow VI—VI in Fig. 2;

Fig. 7 is a view as seen in the direction of arrow VII—VII in Fig. 2;

Fig. 8 is a view in explanation of the manner in which the fins are formed in one embodiment of the method for producing a heat transfer wall according to the invention;

Fig. 9 is a view as seen in the direction of arrows IX—IX in Fig. 8;

Figs. 10 and 11 are views each showing an end portion of the shallow groove;

Fig. 12 shows the configuration of the fins;

Figs. 13—15 are views in explanation of the manner in which a liquid in contact with the heat transfer wall boils;

Fig. 16 is a diagrammatic representation of the heat transfer characteristic of the heat transfer wall comprising one embodiment of the invention;

Fig. 17 is a diagrammatic representation of the relation between the heat transfer rate and $\psi$; and

Fig. 18 is a diagrammatic representation of the heat transfer characteristic of another embodiment.

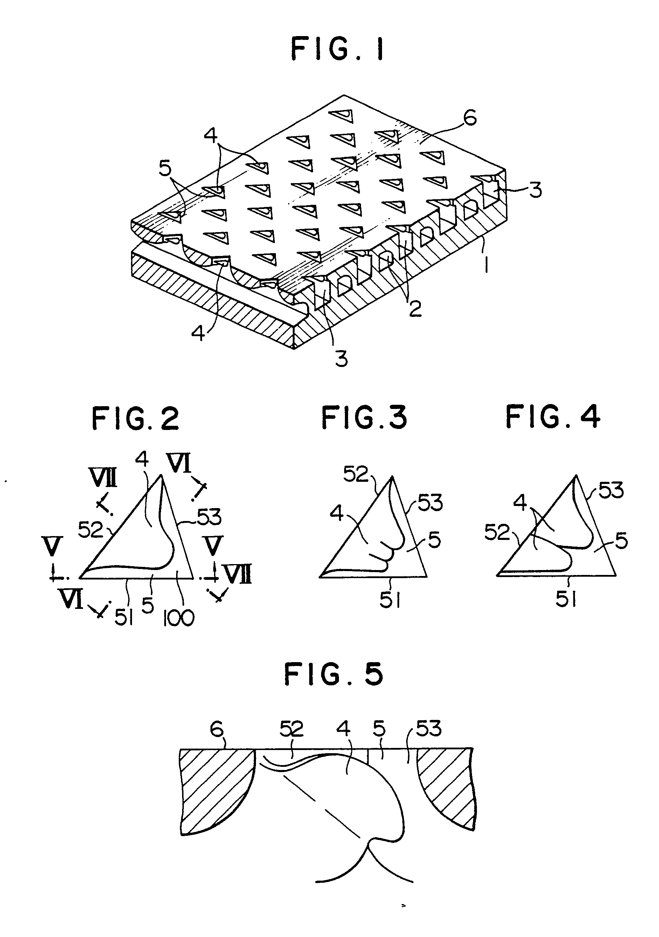

Fig. 1 schematically shows a wall surface portion of a heat transfer tube worked by the method according to the invention. As shown, a multiplicity of minute tunnels 2 parallely extending and spaced apart from each other by a minuscule distance are formed in a body 1 of the heat transfer tube. A plurality of holes 5 of substantially triangular configuration are formed on an outer surface 6 above each tunnel 2 and located at regular intervals. In each hole 5 is a projection 4 which is the characterizing feature of the invention. Two-dimensionally, the projection 4 is smaller in size than the triangular hole 5, as shown in Fig. 2, and protrudes into the triangular hole 5 from one side 52 of the hole 5 which extends from another side 51 located parallel to the associated tunnel 2 and represents an extension of one surface of a wall 3 of the tunnel 2. Still another side 53 extends from the side 51 and crosses the side 52, to complete the triangular shape of the hole 5. Thus, the projection 4 protrudes into the hole 5 in a manner to traverse and partly block same. The projection 4 may be of any shape as desired. As shown in Fig. 3, the projection 4 may be split at its forward end portion. As shown in Fig. 4, the projection 4 may be shaped to have two tongues at its forward end portion.

Three-dimensionally, the projection 4 extending from one side 52 of the triangular hole 5 is inclined by 5—80 degrees so that it is lower in level on the side of the junction of the two sides 52 and 53 than on the side of the junction of the two sides 51 and 52. The projection 4 may be inclined such that its base is substantially parallel or perpendicular to the outer surface 6 and its forward end portion is twisted.

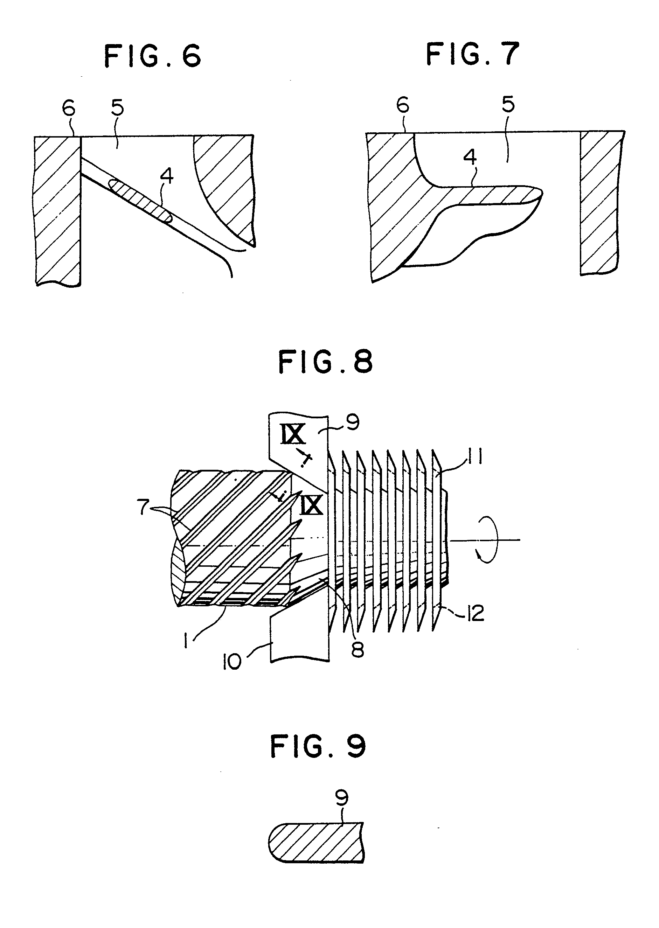

The heat transfer wall of the aforesaid construction can be readily produced by the method according to the invention which will now be described in detail. The method of producing the heat transfer wall shown in Figs. 1—7 comprises, as shown in Figs. 8—12, the step of forming a plurality of shallow grooves 7 on the surface of the body 1 of the material for forming the heat transfer wall; the step of forming a plurality of fins 11 by locally scraping different zones of the surface of the body 1 in a manner to scrape the surface across the shallow grooves 7 without cutting away the surface layer, and the step of bending a forward end portion of each fin 11 sideways into intimate contact with the adjacent fin 11. These steps are sequentially followed.

EP 0 175 216 B1

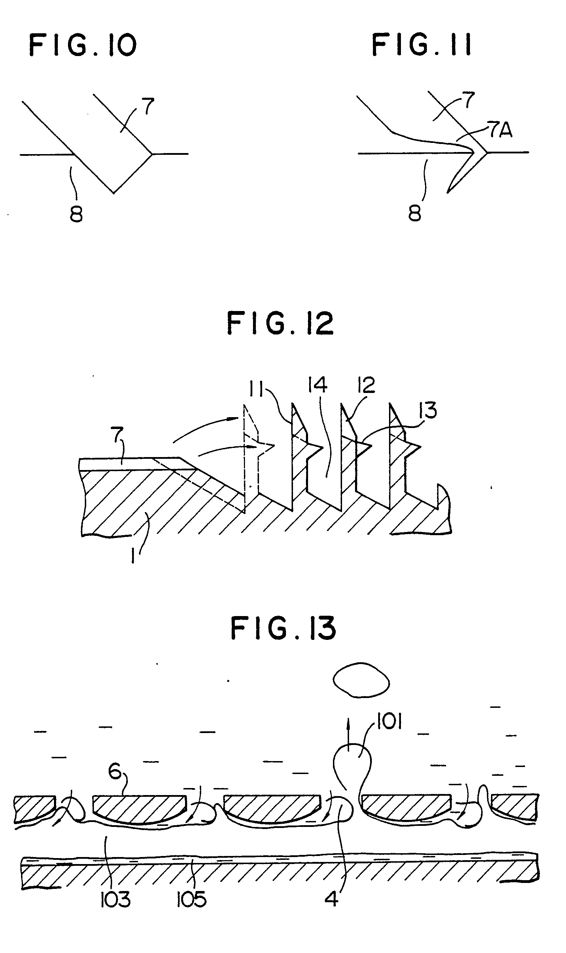

In forming the shallow grooves 7 in the first step, the body or tube 1 of heat transfer material, which may be a copper tube of an outer diameter of 18.0 mm and a wall thickness of 1.1 mm, has its outer surface worked by a knurling tool, as shown in Figs. 8 and 10, in such a manner that the shallow grooves 7 of V-shaped cross-sectional shape and inclined by 45 degrees with respect to the axis of the tube 1 are formed in convolutions extending helically in close proximity to each other on the outer surface of the wall of the tube 1. The shallow grooves thus formed are preferably spaced apart from each other by a spacing interval of 0.2—1.0 mm. In the embodiment shown and described herein, the spacing interval is 0.5 mm, and the shallow grooves 7 each have a depth of 0.1—0.15 mm.

The shallow grooves 7 have been described as having a cross-sectional shape of the letter V. It is to be understood, however, that the invention is not limited to this specific cross-sectional shape of the shallow grooves 7, and that the cross-sectional shape of the shallow grooves 7 may be in any known form as desired, such as in the form of a letter U, trapezoidal or arcuate. Although the shallow grooves 7 have been described as being formed by knurling, the invention is not limited to this specific form of working and roll forming using a knurling tool or machining using a cutting tool may be relied on for forming the shallow grooves 7.

In the step of forming the fins 11 following the step of forming the shallow grooves 7, the outer surface of the tube 1 is machined by using a cutting tool 10 in such a manner as to scrape the outer surface across the shallow grooves 7 without cutting away the surface area, as shown in Figs. 8 and 12, so as to thereby form on the outer surface of the wall of the tube 1 a multiplicity of tiny fins 11 separated from each other by a gap 14 greater in dimension than the depth of a cut made into the surface layer of the tube 1 and each having at the forward end portion a cutout 12 of substantially V-shape, and in the vicinity of a valley a protuberance 13. By using a machined surface deforming tool 9 in addition to the cutting tool 10 as shown in Fig. 8, it is possible to readily form the protuberance 13 in the vicinity of the valley of the cutout 12 of each fin 11.

Immediately after the fins 11 are formed, the shallow grooves 7 located at a machined surface 8 are configured such that, as shown in Fig. 10, the V-shaped profile of each shallow groove 7 can be clearly seen without being distorted. After the fins 11 are formed, the deforming tool 9 of a cross-sectional shape shown in Fig. 8 is forced against the machined surface 8 to deform in one direction each shallow groove 7 as indicated at 7A in Fig. 11. By moving the deforming tool 9 relative to the cutting tool 10 in the same direction while forcing the former against the machine surface 8 to thereby rub the machined surface 8, the material of the machined surface 8 in the vicinity of the V-shaped shallow grooves 7 is caused to flow into the grooves 7, thereby blocking a portion of each groove 7 as shown in Fig. 11 or deforming the end portion 7A of each shallow groove 7 as if it were covered with the material. After the machined surface 8 is deformed as described hereinabove, the surface of the tube is locally scraped by means of the cutting tool 10 for forming the fins 11 without cutting away the surface layer. Thus, the fins 11 shown in Fig. 12 are formed in which each fin 11 has at the forward end portion the V-shaped cutout 12 which is a trace of each shallow groove 7 and in the vicinity of the valley of the cutout 12 the protuberance 13. The portions 7A of the grooves 7 that have been deformed at the machined surface 8 in a manner to block each of the shallow grooves 7 are each deformed into the protuberance 13 as each fin 11 is formed by scraping the outer surface without cutting away the surface layer of the tube 1. The tiny fins 11 are preferably formed at a spacing interval of 0.2—1.5 mm.

In the embodiment shown and described hereinabove, the fin forming operation has been performed on the copper tube 1 formed with the shallow grooves 7 beforehand as described hereinabove. The conditions of the fin forming operation included a cutting angle of 25 degrees, a spacing interval between the fins of 0.5 mm and a cutting depth of 0.35 mm, and the fins 11 produced as a result of the operation had a height of 0.90 mm and was arranged in helical convolutions having an inclination of substantially 90 degrees with respect to the center axis of the copper tube 1. In the embodiment shown and described hereinabove, a portion of the cutting tool 10 was made to function as the deforming tool 9 so that the machined surface 8 will be rubbed thereby immediately after the surface area of the tube 1 is scraped without cutting away the surface layer. Thus, the protuberance 13 was formed in the vicinity of the valley of the cutout 12 of each fin 11.

After the fins 11 each having the protuberance 13 in the vicinity of the valley of the cutout 12 are formed, the step of deforming the forward end portion of each fin 11 is performed. In this step, the forward end portion of each fin 11 is bent toward the side on which the protuberance 13 is located into intimate contact with an intermediate portion of the adjacent fin 11. The gap 14 that separated the fins 11 from each other is consequently closed at its top. Thus, as shown in Fig. 1, the minute tunnels 2 communicating with the outside through the tiny holes 5 which are the products of the deformation of the cutouts 12 of the fins 11 are formed below the outer surface 6 which is constituted by the forward end portions of the fins 11 that have been deformed. The protuberances 13 in the vicinity of the valleys of the cutouts 12 of the fins 11 are deformed into the projections 4 each appearing in one of the tiny holes 5.

In bending the forward end portion of each fin sideways, a flat roll may be used to crush the forward end portion of each fin, or a die may be used to draw each fin.

In the embodiment of the invention shown and described hereinabove, the copper tube 1 formed with the fins 11 each having the protuberance 13 was rotated about its center axis and moved axially at the same time while a flat roll was maintained in contact with its outer periphery, so as to reduce its outer diameter to

4

18.30 mm by the pressure applied by the flat roll. In this operation, the holes 5 of substantially triangular configuration were formed at regular intervals at the outer surface 6 above each tunnel 2. The holes 5 each having an imaginary inner circle of a diameter of about 0.2 mm were each formed with the projection 4 extending into the interior of each hole 5, as shown in Fig. 2. Each tunnel 2 below the outer surface 6 had a width of about 0.26 mm and a height of about 0.50 mm.

The inclination of the projection 4 renders a narrow gap 100 (Fig. 2) defined between the hole 5 and projection 4 along the projection 4 non-uniform in shape both two-dimensionally and three-dimensionally. The presence of the non-uniform gap 100 clearly separates a section of the hole 5 for bubbles of vapor to flow therethrough out of the tunnel 2 from a section of the hole 5 for a liquid to flow therethrough into the tunnel 2, thereby enabling the two flows of fluid to be effectively regulated. The non-uniformity of the narrow gap 100 can be obtained by varying the configuration or position of the projections 4 from each other with respect to the holes 5 or by varying the thickness of the edge of the projections 4 and/or the holes 5. When the non-uniformity of the narrow gap 100 is obtained in this way, the projections 4 need not be inclined with respect to the wall surface 6.

The holes 5 and projections 4 may be made to have a variety of combinations of shapes and configurations. The flow of vapor released from the tunnels 2 through the holes 5 having the projections 4 offers resistance to the flow of a liquid led into the tunnels 2 through the holes. Thus, an optimum vapor passageway area should be determined to suit the volume of released vapor. The heat transfer surface provided by the heat transfer wall according to the invention can have a high heat transfer characteristic and exhibit an improved performance when a vapor passageway area provided thereby is in the range of optimum values.

When the heat transfer tube 1 of the surface area construction as described hereinabove is heated by temperatures higher than the temperature of a liquid brought into contact therewith to boil, vapor bubbles 103 are produced in each tunnel 2 as shown in Fig. 13.

Fig. 13 shows the entire wall surface of the tunnel 2 covered with a liquid film 105. When the tunnel 2 is in this condition, the heat transfer surface of the heat transfer wall according to the invention operates in a favorable condition and exhibits a high boiling heat transfer performance. More specifically, when the heat transfer surface is heated, the heat is transferred from the inner wall surfaces of the tunnel 2 to a liquid in the tunnel 2. In the case of the heat transfer surface shown in Fig. 13, all the inner wall surfaces of the tunnel 2 take part in effective transfer of heat. Thus, when the heat transfer wall 1 is heated, the heat of the heat transfer wall 1 is first transferred to the liquid film 105. The liquid film 105 is small in thickness, so that the liquid quickly vaporizes, thereby removing the latent heat of vaporization from the inner wall surfaces of the tunnel 2. As soon as the inner wall surfaces of the tunnel 2 become dry, the liquid is supplied through the holes 5 to the tunnel 2 and a new liquid film 105 is formed on the entire wall surface of the tunnel 2. Thus, the liquid film 105 of a uniform small thickness covers the entire wall surface of the tunnel 2 at all times during operation.

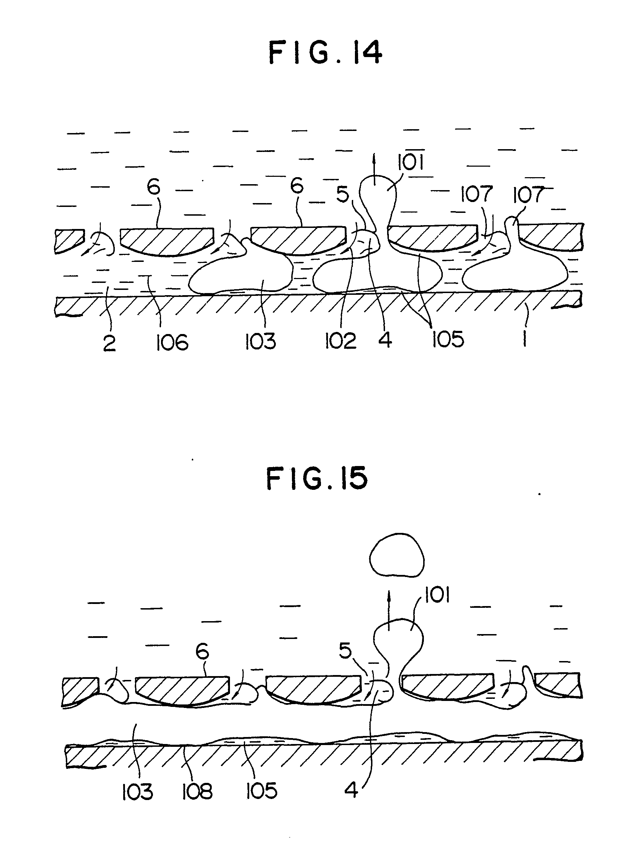

When the heat transfer tube 1 is not heated vigorously, the volume of vapor produced in the tunnel 2 is small. Assume that the liquid is a refrigerant in a liquefied state. Then, the resistance offered by the flow of the gaseous refrigerant released from the tunnel 2 to the outside to the flow of the liquefied refrigerant entering the tunnel 2 is small, so that the entry of the liquefied refrigerant into the tunnel 2 is facilitated. As a result, the tunnel 2 is partially filled with the liquefied refrigerant as indicated at 106 in Fig. 14. The tiny projections 4 according to the invention perform the function of heating the liquefied refrigerant flowing into the tunnel 2 through the holes 5. Therefore, the regions of the tunnel 2 filled with the liquefied refrigerant are smaller than would be the case if no projections 4 were provided and the liquefied refrigerant were allowed to freely enter the tunnel 2. Thus, the heat transfer wall according to the invention provided with the projections 4 can exhibit a high boiling performance.

When the tunnel 2 is in the condition shown in Fig. 14, the area of the surface of the liquid film 105 in which vaporization takes place is naturally reduced. In the regions of the tunnel 2 that are filled with the liquefied refrigerant, heat is transferred in the form of a sensible heat produced as the liquefied refrigerant is heated. When the heat is transferred in the form of sensible heat, the heat transfer performance is greatly reduced as compared with the transfer of heat in the form of latent heat. When the heat transfer tube 1 is not heated vigorously, the projections 4 may be relatively increased in size to reduce the volume of the liquefied refrigerant introduced into the tunnel 2. This is conducive to improved heat transfer performance because of a reduction in the regions of the tunnel 2 that are filled with the liquefied refrigerant.

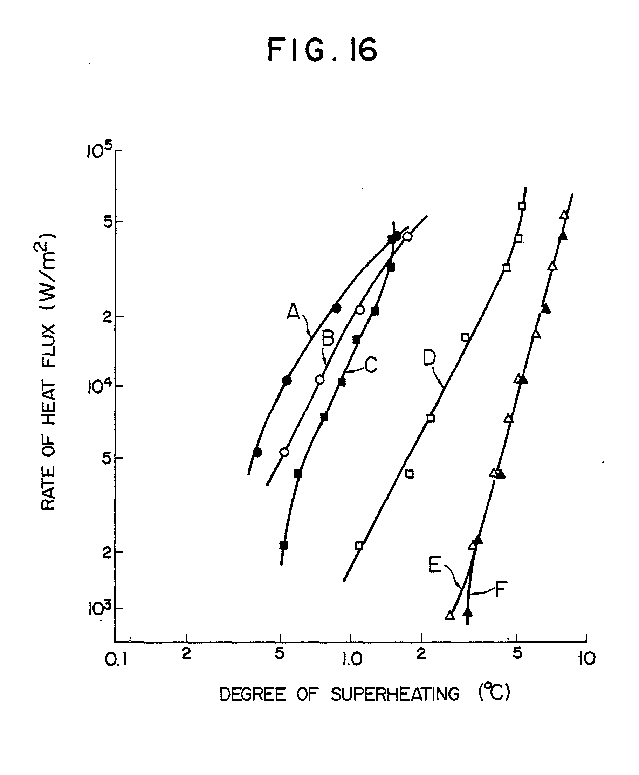

Meanwhile, then the heat transfer tube 1 is vigorously heated, the volume of the gaseous refrigerant produced in the tunnel 2 increases and the volume of the liquefied refrigerant introduced into the tunnel 2 decreases. When this condition occurs, no liquid film is formed on the inner wall surfaces of the tunnel 2 and dried surface portions 108 are formed on the inner wall surfaces of the tunnel 2, as shown in Fig. 15, in which the inner wall surfaces are directly in contact with the gaseous refrigerant. In this case, the transfer of heat in the form of sensible heat to the gaseous refrigerant takes place in regions where the dried surface portions 108 exist, with a result that the heat transfer performance is greatly reduced as compared with the transfer of heat in the form of latent heat taking place as the thin film of liquid vaporizes. When the heat transfer tube 1 is vigorously heated, the projections 4 may be relatively reduced in size to thereby increase the volume of the liquefied refrigerant introduced into the tunnel 2. This is conducive to improved heat transfer performance because the area of the dried surface portions on the inner wall surfaces of the tunnel 2 is reduced.

From the foregoing description, it will be appreciated that the size of the projection 4 has an optimum range of values which enables a high heat transfer performance to be achieved in accordance with the degree to which the heat transfer wall is heated.

In the embodiment of the invention shown and described hereinabove, a multiplicity of tunnels having a maximum height of 0.45 mm, a minimum height of 0.3 mm and a width of 0.25 mm were formed in helical convolutions immediately below the outer surface of a copper tube of an outer diameter of 18 mm and a wall thickness of 1.1 mm. The tunnels which were spaced apart from each other by a spacing interval of 0.5 mm were inclined at an angle which is almost 90 degrees with respect to the center axis of the copper tube. A portion of the outer surface of the copper tube lying immediately above each tunnel was rendered smooth except where holes of substantially triangular configuration was provided. The triangular holes, which each have a size equal to that of an imaginary inner circle of a diameter of 0.2 mm, were formed along each of the tunnels with a spacing interval of 0.8 mm. The holes of this construction were each provided with a projection having a base on the side 52 as shown in Fig. 2 and extending across the hole. The projection, which is smaller in size than the hole as viewed two-dimensionally, was inclined by about 45 degrees, so that it was lower in level on the side of the junction of the side 52 and the side 53 than on the side of the junction of the side 52 and the side 51, as shown in Fig. 5.

The ratio $\psi$ of the area of the projection to the area of the hole as shown in Fig. 2 was varied in a range between 0.2 and 0.8. Thus, six kinds of heat transfer wall were produced. Table 1 shows the values of $\psi$ of these six kinds of heat transfer wall.

TABLE 1

| | | Mean value | Range of variations |
|---|---|---|---|
| Heat transfer wall | No. 1 . . . | $\psi=0.29$ | 0.19—0.33 |
| " | No. 2 . . . | $\psi=0.31$ | 0.27—0.36 |
| " | No. 3 . . . | $\psi=0.44$ | 0.37—0.53 |
| " | No. 4 . . . | $\psi=0.60$ | 0.54—0.66 |
| " | No. 5 . . . | $\psi=0.66$ | 0.58—0.74 |
| " | No. 6 . . . | $\psi=0.68$ | 0.61—0.78 |

By using trichlorofluoromethane ($CFCl_3$), experiments were conducted on these six kinds of heat transfer wall to determine the extra-tubular boiling heat transfer characteristic under atmospheric pressure conditions. The results of the experiments are shown in Fig. 16 in which lines A, B, C, D, E and F represent the characteristics of the heat transfer wall No. 4, No. 6, No. 5, No. 3, No. 1 and No. 2, respectively.

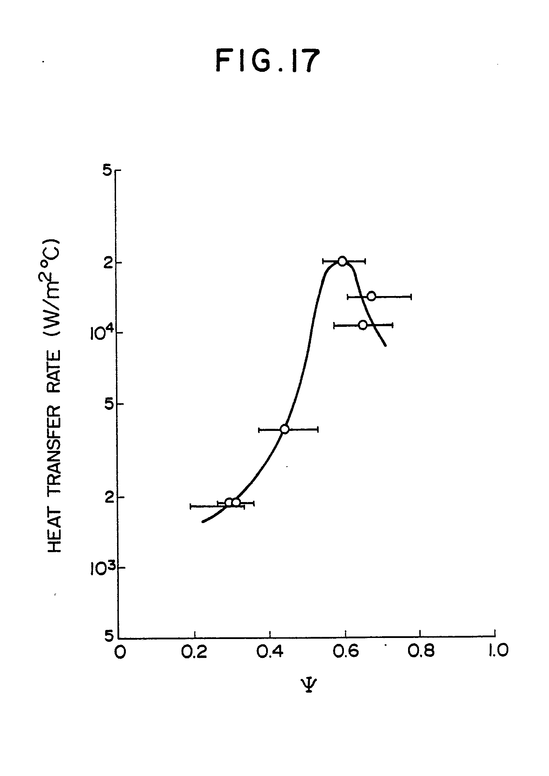

In an air conditioning system or a refrigerating apparatus, heat transfer tubes having the heat transfer walls described hereinabove are immersed in a refrigerant in a liquid state, such as Freon, and cause same to boil, to cool water flowing through the heat transfer tubes. In this case, the rate of heat flux used is about $10^4$ W/m². Fig. 17 shows the relation between the heat transfer rate and the ratio $\psi$ of the area of the projection 4 to the area of the hole 5 which was established by keeping the rate of heat flux constant at $10^4$ W/m². As can be seen in the figure, the range of the values of $\psi$ that enables a high heat transfer rate to be achieved is between 0.5 and 0.7 as determined based on the mean values of $\psi$, or in the range between 0.4 and 0.8 when the range of variations of the value of $\psi$ for each heat transfer wall is taken into consideration.

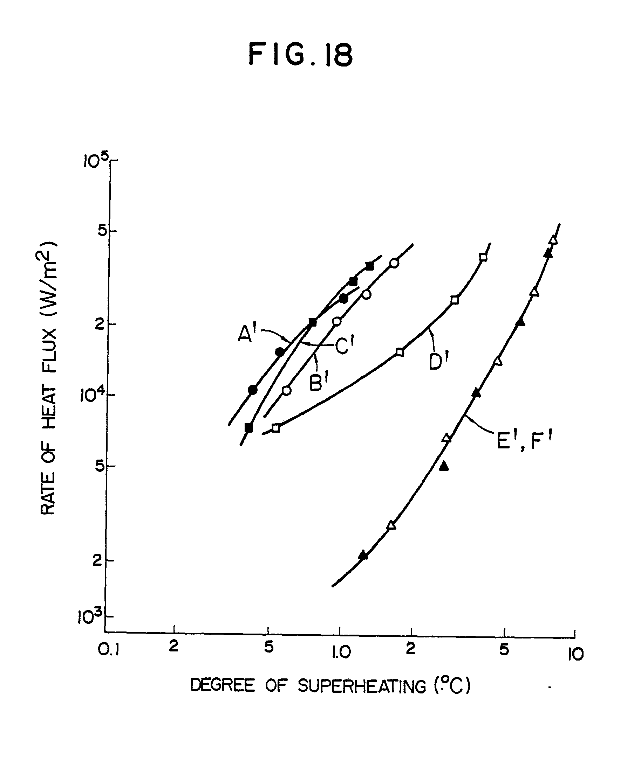

In the foregoing description, the heat transfer wall has been described as being immersed in a liquefied refrigerant and causing same to boil in what is referred to as a pool boiling condition. It is to be understood, however, that the heat transfer wall according to the invention is not limited in use to the immersion in a liquefied refrigerant, and that the invention may have application in a system in which a liquefied refrigerant is dropped or sprayed onto the heat transfer wall to provide a thin coat of refrigerant for vaporization. Fig. 18 shows the results of experiments conducted on the heat transfer walls No. 1 to No. 6 shown in Table 1, as are the experiments whose results are shown in Fig. 16, to determine the extra-tubular thin coat vaporization heat transfer characteristic of the heat transfer walls. In the figure, lines A', B', C', D', E' and F' correspond to the heat transfer walls A, B, C, D, E and F, respectively, shown in Fig. 16. It will be seen that the heat transfer walls having an excellent boiling heat transfer characteristic also have an excellent thin coat vaporization heat transfer characteristic, and that the optimum value of $\psi$ for achieving an excellent thin coat vaporization heat transfer characteristic is in the range between 0.5 and 0.7 as determined based on the mean value of $\psi$ or in the range between 0.4 and 0.8 when the range of variations in the value of $\psi$ for each heat transfer wall is taken into consideration.

6

In the embodiment shown and described hereinabove, the tunnels have been described as being continuous in spiral convolutions. However, the invention is not limited to this specific constructional form of the tunnels, and the tunnels may be either linear or annular in constructional form. The heat transfer wall may, of course, be tubular, annular, in plate form or of any other form. The material of the heat transfer wall has been described as being copper. However, the invention is not limited to the heat transfer wall of this specific material, and the heat transfer wall according to the invention may be formed of any metal or alloy as described.

## Claims

1. A heat transfer wall for vaporizing liquids, comprising:

a plurality of elongated minute tunnels (2) formed beneath an outer surface (6) of said heat transfer wall to be in contact with a liquid and separated from said liquid by said outer surface (6), each said tunnel (2) being parallel to and spaced from an adjacent tunnel (2) by a small spacing interval; and

a plurality of tiny holes (5) formed at said outer surface (6) and being located along the tunnels (2) at regular intervals with a minuscule spacing interval from each other to keep the tunnels (2) in communication with the outside;

characterized in that in each hole (5) a projection (4) is located extending from the vicinity of said hole (5) in a manner to traverse and partly block the same, said projection (4) having a size such that, two-dimensionally, the ratio of the area of the projection (4) to the area of the hole (5) is in the range between 0.4 and 0.8.

2. A method for producing the heat transfer wall of claim 1, comprising the steps of:

forming a plurality of shallow grooves (7) on a surface (8) of said heat transfer wall;

forming a plurality of fins (11) each having cutouts (12) at a forward end portion thereof by scraping the surface (8) of the heat transfer wall across said shallow grooves (7) with a cutting tool (10); and

bending the forward end portions of said fins (11) in a direction which crosses the fins so as to bring each fin into contact with the adjacent fin, whereby the plurality of tunnels (2) and holes (5) is formed;

characterized in that the projections (4) in the holes (5) are formed by deforming end portions of the shallow grooves (7) located at said surface (8) to form protuberances (13) each being rubbed on said surface after scraping and protruding from the end portion of said shallow grooves (7).

3. The method according to claim 2, characterized in that a portion of said cutting tool (10) is made to function as a deforming tool (9) for forming said protuberances (13).

4. The method according to claim 2, characterized in that a deforming tool (9) is operated separately from said cutting tool (10) for forming said protuberances (13).

## Patentansprüche

1. Wärmeübertragungswand zum Verdampfen von Flüssigkeiten

mit einer Vielzahl von langgestreckten, sehr kleinen Tunnels (2), die inter einer Außenfläche (6) der Wärmeübertragungswand ausgebildet sind, um in Kontakt mit einer Flüssigkeit zu stehen und um von dieser Flüssigkeit durch die Außenfläche (6) getrennt zu sein, wobei jeder Tunnel (2) parallel zu einem benachbarten Tunnel (2) und entfernt um einen geringen Abstand davon angeordnet ist; und

mit einer Vielzahl von winzigen Löchern (5), die in der Außenfläche (6) ausgebildet und längs der Tunnel (2) in regelmäßigen Intervallen positioniert sind, wobei sie zueinander einen sehr kleinen Abstand haben, um so die Tunnels (2) in Verbindung mit der Außenseite zu halten,

dadurch gekennzeichnet, daß in jedem Loch (5) ein Vorsprung (4) angeordnet ist, der sich von der Nachbarschaft des Lochs (5) aus derart erstreckt, daß er dieses überquert und teilweise blockiert, wobei der Vorsprung (4) eine solche Größe hat, daß zweidimensional das Verhältnis der Fläche des Vorsprungs (4) zur Fläche des Lochs (5) in einem Bereich zwischen 0,4 und 0,8 liegt.

2. Verfahren zur Herstellung der Wärmeübertragungswand nach Anspruch 1, welches folgende Schritte aufweist:

Ausbildung einer Vielzahl von flacher Nuten (7) an einer Oberfläche (8) der Wärmeübertragungswand;

Ausbildung einer Vielzahl von Rippen (11), von denen jede Ausnehmungen (12) an ihrem vorderen Endabschnitt hat, durch Kratzen der Oberfläche (8) der Wärmeübertragungswand quer über die flachen Nuten (7) mit einem Schneidwerkzeug (10); und

Biegen der vorderen Endabschnitte der Rippen (11) in eine Richtung, die die Rippen kreuzt, um so jede Rippe in Kontakt mit der benachbarten Rippe zu bringen, wodurch die Vielzahl von Tunnels (2) und Löchern (5) gebildet wird;

dadurch gekennzeichnet, daß die Vorsprünge (4) in den Löchern (5) durch Verformen von Endabschnitten der an der Oberfläche (8) positionierten flachen Nuten (7) gebildet werden, wodurch vorstehende Stellen (13) gebildet werden, von denen jede an der Oberfläche nach dem Kratzen und Vorstehen aus dem Endabschnitt der flachen Nut (7) abgerieben wird.

3. Verfahren nach Anspruch 2, dadurch gekennzeichnet, daß ein Abschnitt des Schneidwerkzeugs (10) so ausgeführt ist, daß er als ein verformendes Werkzeug (9) zur Ausbildung der vorstehenden Stellen (13) wirkt.

# EP 0 175 216 B1

4. Verfahren nach Anspruch 2, dadurch gekennzeichnet, daß ein verformendes Werkzeug (9) getrennt von dem Schneidwerkzeug (10) zur Bildung der vorstehenden Stellen (13) arbeiten gelassen wird.

**Revendications**

1. Paroi de transfert thermique pour la vaporisation de liquides, comprenant:
une pluralité de tunnels allongés minuscules (2) formés au-dessous d'une surface extérieure (6) de ladite paroi de transfert thermique de manière à être en contact avec un liquide et être séparés dudit liquide par ladite surface extérieure (6), chacun desdits tunnels (2) étant parallèle à et séparé d'un tunnel voisin (2) par un faible intervalle de séparation; et
— une pluralité de petits trous (5) formés dans ladite surface extérieure (6) et situés le long des tunnels (2) à des intervalles réguliers en étant séparés les uns des autres par un faible intervalle de séparation, pour maintenir les tunnels (2) en communication avec l'extérieur;
caractérisée en ce que dans chaque trou (5) une partie saillante (4) s'étend à partir du voisinage dudit trou (5) de manière à traverser et fermer partiellement ce trou, ladite partie saillante (4) possédant des dimensions telles que, du point de vue bidimensionnel, le rapport de la surface de la partie saillante (4) à la surface du trou (5) se situe dans la gamme comprise entre 0,4 et 0,8.

2. Procédé pour fabriquer la paroi de transfert thermique selon la revendication 1, incluant les étapes consistant à:
former une pluralité de gorges peu profondes (7) dans une surface (8) de ladite paroi de transfert thermique
former une pluralité d'ailettes (11) comportant chacune des découpes (12) au niveau d'une partie de leurs extrémités avant, par grattage de la surface (8) de la paroi de transfert thermique à l'aide d'un outil de coupe (10), en travers desdites gorges peu profondes (7); et
replier les parties d'extrémité avant desdites ailettes (11) dans une direction recoupant les ailettes de manière à placer chaque ailette en contact avec l'ailette voisine, de manière à former ainsi la pluralité de tunnels (2) et de trous (5);
caractérisé en ce que les parties saillantes (4) situées dans les trous (5) sont obtenues par déformation des parties d'extrémité des gorges peu profondues (7) situées au niveau de ladite surface (8) de manière à former des protubérances (13) dont chacune est rabattue sur ladite surface après grattage—et amenée dans un état saillant à partir de la partie d'extrémité desdites gorges peu profondues (7).

3. Procédé selon la revendication 2, caractérisé en ce qu'une partie dudit outil de coupe (10) est conçue de manière à agir en tant qu'outil de déformation (9) pour former lesdites protubérances (13).

4. Procédé selon la revendication 2, caractérisé en ce qu'un outil de déformation (9) est mis en oeuvre indépendamment dudit outil de coupe (10) pour la formation desdites protubérances.

8

# FIG. 1

# FIG. 2

# FIG. 3

# FIG. 4

# FIG. 5

1

FIG. 6

FIG. 7

FIG. 8

FIG. 9

2

# FIG. 10

# FIG. 11

# FIG. 12

# FIG. 13

EP 0 175 216 B1

FIG. 14

FIG. 15

4

# FIG. 16

# FIG.17

# FIG. 18